# EUROPÄISCHE PATENTSCHRIFT

(11) **EP 0 930 599 B1**
(45) Veröffentlichungstag und Bekanntmachung des Hinweises auf die Patenterteilung: **20.07.2005**
(21) Anmeldenummer: 98890134.4
(22) Anmeldetag: 08.05.1998
(51) Int. Cl.: G09F 9/30, G02B 6/36, B23D 27/00

(54) **Befestigung von Lichtwellenleiter an Anzeigetafel**
Attachment of an optical fibre to a display panel
Fixation d'une fibre optique à un panneau d'affichage

(30) Priorität: 19.01.1998 AT 6498
(43) Veröffentlichungstag der Anmeldung: 21.07.1999
(73) Patentinhaber: SWARCO FUTURIT Verkehrssignalsysteme Ges.m.b.H., 3300 Amstetten (AT)
(72) Erfinder: Silhengst, Franz, 3004 Ollern (AT); Hofstadler, Friedrich Peter, Dipl.-Ing., 4040 Linz (AT); Otto, Alexander Dipl. Ing., 2102 Bisamberg/Wien (AT)
(74) Vertreter: Patentanwälte BARGER, PISO & PARTNER

(56) Entgegenhaltungen:
- EP-A- 0 757 268
- DE-A- 4 104 706
- FR-A- 579 289
- GB-A- 1 215 920

## Beschreibung

Die Erfindung betrifft eine Optikeinheit für Signal-, Verkehrs- und Anzeigegeräte, welche die Information mittels einer Anordnung von Lichtpunkten darstellen. Hierbei wird entweder das gebündelte Licht einer oder mehrerer Glühlampen mittels optischer Fasern ("Lichtleiter") auf eine Vielzahl zumeist baugleicher optischer Elemente, auch "Optiken", "Lichtpunkte" oder "Linsen" genannt, aufgeteilt, oder es sind in jedem optischen Element ein oder mehrere Lichtquellen, vorzugsweise LED, einzeln oder in Gruppen ansteuerbar, eingebaut. Die Optiken sind an der Frontseite des Gerätes in einer sogenannten "Matrixplatte" derart angeordnet, daß die zu einer Lichtquelle oder Lichtquellengruppe gehörigen Lichtpunkte eine symbolische Darstellung oder alphanumerische Zeichen bilden und eine gemeinsame Ausstrahlungsrichtung und - charakteristik aufweisen.

Die Geräte mit den höchsten technischen Anforderungen finden insbesonders in der Verkehrssignalisation Verwendung, wobei in der Regel durch Umschalten der Lichtquellen zwischen verschiedenen Symbolen und Texten ausgewählt werden ("Wechselverkehrszeichen"), oder durch individuelle Lichtpunktansteuerung eine beliebig programmierbare Darstellung oder Grafik erzeugt werden kann.

Die mechanischen Anforderungen bestehen insbesonders in höchster Witterungs- und Temperaturstabilität, Dichtheit, Gleichmäßigkeit der einzelnen Lichtpunkte, Windlast, Reinigung etc. Die Erfüllung dieser Ansprüche hängt zum größten Teil von der Art der Befestigung der einzelnen Optiken in der Matrixplatte des Gerätes ab.

Wurde früher die Abdichtung der Geräte durch eine vorgesetzte Scheibe bewirkt, so hat sich heute aus vielen Gründen die Bauform ohne Frontscheibe durchgesetzt. Daher wird insbesonders der absolut dichte Einbau der Optiken gefordert.

Weiters hat sich in letzter Zeit der Wunsch nach einer möglichst glatten Gerätefront ergeben, sodaß die Anzeige leicht gereinigt werden und sich kein Schmutz festsetzen kann.

Bisher sind Ausführungen bekannt, bei denen die Optiken in die Löcher der Matrixplatte eingepreßt oder eingesetzt werden. Die Sicherung gegen Herausfallen und Abdichtung erfolgt durch das Einpressen selbst, durch Klebstoff, Vergußmasse oder mechanische Sperrelemente und Dichtungen. Das saubere Hantieren mit Klebstoff und die sichere Abdichtung stellen hohe, auch personelle Anforderungen an die Fertigung.

Weiters sind Ausführungen bekannt, wo in die Matrixlöcher Gummitüllen eingeschnappt werden, in welche wiederum die Optiken eingeschnappt werden. Diese Ausführungen weisen allerdings eine gewisse Elastizität in der Befestigung auf, welche sich in einem uneinheitlichen Abstrahlungswinkel äußert.

Weiters sind Ausführungen bekannt, wo die Befestigung schraubenähnlich mittels Dichtring und Mutter erfolgt. Hierdurch wird üblicherweise ein größerer Abstand benachbarter Optiken notwendig.

Weiters sind Ausführungen bekannt, wo Optiken dicht eingepreßt und durch elastische Schnapphaken gesichert werden. Die Ausbildung der Schnapphaken bedingt ein kompliziertes Optikgehäuse, welches wenig stabil und nicht lichtdicht ist. Außerdem sind Konstruktionen mit Schnappmechanismus an eine definierte Stärke der Matrixplatte gebunden.

Schließlich ist eine dübelartige Befestigung bekannt, welche durch Aufweiten des Optik-Gehäuses beim Einpressen der Linse hält und abdichtet (EP 0 757 268 A1). Diese erprobte Methode erfordert jedoch bei stark unterschiedlichen Matrixstärken unterschiedliche Gehäuse- und Linsenausführungen. Weiters ist sie bei in die Matrixplatte versenkten Optiken wegen der Notwendigkeit, die Matrixlöcher zu bohren, nicht wirtschaftlich anwendbar.

Gesucht ist eine Befestigungsmethode, welche insbesonders eine flächenbündige, kostengünstige Montage der Optiken in der Matrix erlaubt, deren Befestigungsloch einfach und rasch insbesonders auf einer Nibbelmaschine hergestellt werden kann, die funktionssicher und unempfindlich gegenüber Bauteil- und Fertigungstoleranzen ist und eine exakte Positionierung und Ausrichtung jeder einzelnen Optik garantiert; die auch leicht in der Fertigung automatisierbar ist; die ein stabiles, geschlossenes, die Linse schützendes und Fremdlicht abschirmendes Gehäuse sowie beliebige Optikdurchmesser und möglichst geringen Abstand benachbarter Optiken erlaubt; die in Matrixplatten unterschiedlichster Stärke ohne Modifikationen montierbar und absolut druckdicht und unempfindlich gegenüber allen gebräuchlichen Reinigungsmethoden ist.

Dieses Problem wird erfindungsgemäß mit einer Optikeinheit gemäß Anspruch 1 gelöst.

Es handelt sich hier um eine Adaption des Prinzips der bekannten und erprobten Schneidring-Abdichtung bei Rohrleitungsverschraubungen, wo durch das Komprimieren der Kante eines härteren Stahlringes eine dichtende Rille in das weichere Rohr gepreßt wird. Hier drückt sich die im Loch befindliche, eingeprägte Kante durch Aufweiten des Gehäuses ins weiche Material, wenn das Linsenelement eingepreßt wird.

Weitere Merkmale der erfindungsgemäßen Optikeinheit sind in den Unteransprüchen angegeben.

Die Erfindung wird in der Zeichnung schematisch anhand der folgenden Figuren näher beschrieben, wobei Fig. 1 die relevanten Bauteile vor der Montage, Fig. 2 das montierte Gehäuse, Fig. 3 die fertig montierte Optik, Fig. 4 bis 8 Ausführungsvarianten, Fig. 9 einen Querschnitt durch die Einbaulöcher vor und nach der Prägung und Fig. 10 ein Werkzeug zur Herstellung der Prägungen zeigen.

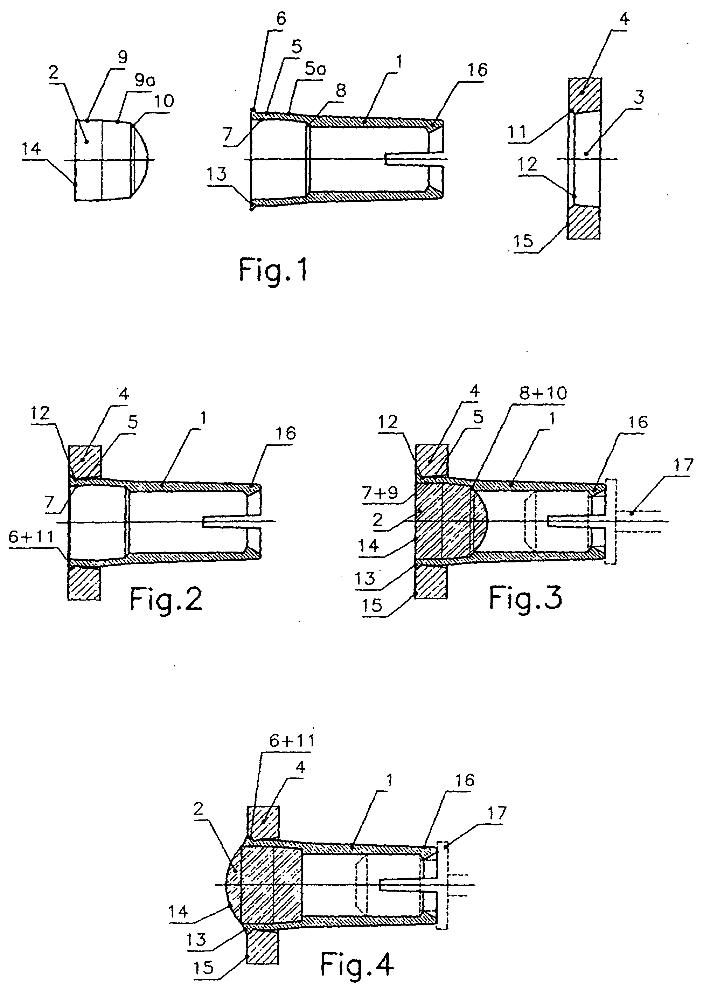

Fig. 1 zeigt das Linsenelement, das Gehäuse und das Einbauloch in axialer Ausrichtung zueinander. In der Mitte ist ein Querschnitt durch das Gehäuse 1 dargestellt. Es besitzt an der linken ebenen Stirnseite 13 einen Flansch 6, an welchem ein im wesentlichen zylindrischer Abschnitt 5 anschließt, welcher in eine Einführschräge 5a übergeht. Die Innenseite 7 ist im Bereich des Flansches 6 und des Umfanges 5 auch zylindrisch, sodaß in der Regel eine gleichmäßige Windstärke des Gehäuses erzielt wird. Es folgt eine Abstufung 8, welche hier als Anschlag für das Linsenelement dient. Das weitere Aussehen des Gehäuses ist für die Betrachtungen nicht mehr relevant. Dargestellt sind Schnapphaken 16, welche eine Lichtquelle oder ein Lichtleiterende 17 halten.

Das Linsenelement 2 links davon besitzt ebenfalls eine ebene Stirnseite 14, an welche ein zylindrischer Abschnitt 9 anschließt. Dieser hat die gleiche Geometrie wie der Abschnitt 7 des Gehäuses 1. Er geht in eine Einführschräge 9a über, an welche die Anlagefläche 10 anschließt. Den Abschluß bildet eine Linsenkuppe, deren Funktion hier nicht relevant ist.

Das Loch 3 in der Matrixplatte 4 ist dem Gehäuseumfang 5 angepaßt und besitzt an der Außenseite 15 eine konische Vertiefung 11, welche eingeprägt wurde. Der Prägevorgang bildet durch die Materialverdrängung eine Kante 12, welche ins Loch 3 hineinragt und dieses dort etwas verengt.

Fig. 2 zeigt das in die Matrixplatte 4 eingepreßte Gehäuse 1. Der Flansch 6 liegt hierbei an der Prägung 11 an. Die Lochkante 12 hat den Gehäuseumfang 5 beim Einpressen ebenfalls verengt, weshalb auch der Innenumfang 7 kleiner geworden ist.

Fig. 3 zeigt die fertig montierte Optik. Wenn das Linsenelement 2 in das Gehäuse 1 eingepreßt wird, drückt es einerseits das Gehäuse 1 mit dem Flansch 6 fest an die Prägung 11, wodurch es exakt ausgerichtet wird, anderseits preßt es mittels der Einführschräge 9a und anschließend mit dem Umfang 9 die Gehäusewand gegen die Kante 12. Weil das Gehäusematerial im Vergleich zur Matrixplatte 4 und dem Linsenelement 2 weicher ist, wird es durch den hohen örtlichen Druck der relativ spitzen Kante 12 plastisch verformt bzw. verdrängt und bettet dabei die Kante 12 dicht ein, selbst wenn sie mit Fließlinien durchzogen oder rauh ist. Das Gehäusematerial drückt aber ebenso auf das Linsenelement 2 zurück, welches aber wegen der zylindrischen Flächen 7 + 9 im Bereich der Kante 12 nicht herausgedrückt werden kann und so die Anordnung sperrt. Die hohe Druckspannung sorgt dabei für eine sichere Abdichtung des Linsenelementes.

Durch das Komprimieren und anschließende Expandieren der Gehäusewandung auf das ungefähre Ausgangsmaß entstehen keine zusätzlichen Spannungen im Material, es sind lediglich die unvermeidlichen Quetschkräfte der Kanteneinbettung vorhanden.

Bei geeigneter Abstimmung der Prägung 11, des Flansches 6 und der Anschläge 8 und 10 bilden die Linsenfläche 14 die Gehäusestirnseite 13 und die Vorderseite der Matrix 15 eine Ebene.

Die Konstruktion ist relativ unempfindlich gegenüber den üblichen Bauteiltoleranzen. Gehäuse und Linsenelement sind so konzipiert, daß diese Teile ohne Grat auf den Dichtflächen 5, 7 und 9 entformt werden können. Die Schwankungstoleranz der Kunststoffteile ist minimal, durch den Einbettungsvorgang werden Toleranzen in der Prägung der Kante 12 und in der Oberflächenqualität aufgefangen. Die exakte Position und Ausrichtung der Optiken wird jedoch insbesonders von der präzisen Ausführung der Lochprägung 11 und dem genauen Fluchten von Loch und Prägung bestimmt. Hierzu wird später ein spezielles Herstellungswerkzeug vorgestellt. Hilfreich ist ferner, wenn der Gehäuseumfang 5 möglichst exakt an den Lochdurchmesser angepaßt ist, sodaß der unversehrte Teil des Loches eine Führung des Gehäuses bildet. Diese Führung wird umso günstiger, je dicker die eingesetzte Matrixplatte ist. Es ist weiters von Vorteil, wenn Prägung 11, Kante 12 und Lochwandung 3 an jeder Stelle des Lochumfanges das gleiche Profil aufweisen, sodaß überall eine sichere Anlage des Flansches 6 und ein gleichmäßiges Einbetten der Kante 12 stattfindet, sodaß die hiermit verbundene geringe Streckung des Gehäuses gleichmäßig ausfällt und das Gehäuse nicht schief steht.

Selbstverständlich kann der Abstand der Optiken zueinander umso geringer gehalten werden, je kleiner die Prägung gewählt wird. Der Abstand ist aber auch vom Lochdurchmesser, von der Prägungsgeometrie, der Stärke und dem Material der Matrixplatte abhängig.

Bei sehr geringem Abstand der Optiken kann insbesonders beim Prägen das benachbarte Loch verdrückt werden. Hier kann ein mehrmals angewandter, wechselweiser Stanz- oder Prägevorgang helfen.

Eine automatisierte Montage ist leicht möglich, da nur Einpreßvorgänge an jenen Matrix-Positionen stattfinden, welche auch für das Lochstanzen und Prägen angefahren werden müssen.

Es ist offensichtlich, daß die vorgestellte Befestigungsmethode unabhängig von der Größe der Optiken oder der Stärke der Matrixplatte ist, weil für die Befestigung nur der äußerste Lochrand mit der eingeprägten Vertiefung 11 und der Haltekante 12 erforderlich ist.

Werden die Optiken mit einem Hochdruckreiniger gewaschen, so wird zusätzlich zur vorhandenen Dichtwirkung einerseits das Gehäuse mit dem Flansch 6 in die Prägung 11 gepreßt, anderseits das Linsenelement mit der Anlagefläche 10 an den Absatz 8 gedrückt, was jeweils zu einer Erhöhung der Dichtwirkung führt. Die Optik kann nur durch Zerstörung ins Geräteinnere hineingedrückt werden.

Die Dauerhaftigkeit der Verbindung ist dadurch sichergestellt, daß einerseits der Bereich plastischer Verformung der Witterung nicht unmittelbar ausgesetzt ist. Weiters werden Materialien gewählt, die besonders UV- und witterungsbeständig sind und innere Spannungen entweder allmählich abbauen oder unbeschadet überstehen. Günstig sind Plexiglas für die Linsenelemente und schwarzes Polyamid oder Polycarbonat für das Gehäuse. Plexiglas ist wesentlich härter und kann deshalb das Gehäuse plastisch verformen. Die Matrixplatte ist üblicherweise aus Aluminium.

Weil die Gehäusewand ein geschlossener Zylinder ist, ist einerseits maximale Stabilität der Optik gegeben, anderseits ist auch das Linsenelement vor Staub und Fremdlichteinwirkung bestmöglich geschützt.

Zur Demontage einer schadhaften Optik ist lediglich das Linsenelement 2 von hinten aus dem Gehäuse 1 zu stoßen. Dann kann das Gehäuse 1 aus dem Loch 3 geschlagen werden. Hierbei schlüpft der Umfang 5 durch die Verengung, weil er nun nach innen nachgeben kann. Nun kann eine neue Optik ohne weitere Vorbereitungen montiert werden.

Fig. 4 zeigt eine Abwandlung der Optik. Die Prägung 11 ist hier nicht kegelig, sondern etwas geschwungen. Hierdurch kann eine genauere Ausrichtung der Optik erzielt werden. Ebenfalls geschwungen sind die Stirnseiten von Gehäuse und Linsenelement. Die vorstehenden Linsen verschmutzen weniger leicht als plane Flächen, wegen der geschlossen verlaufenden Oberfläche kann sich aber trotzdem kein Schmutz ansetzen. Hierdurch lassen sich auch günstigere optische Lichtverteilungen und Eigenschaften verwirklichen.

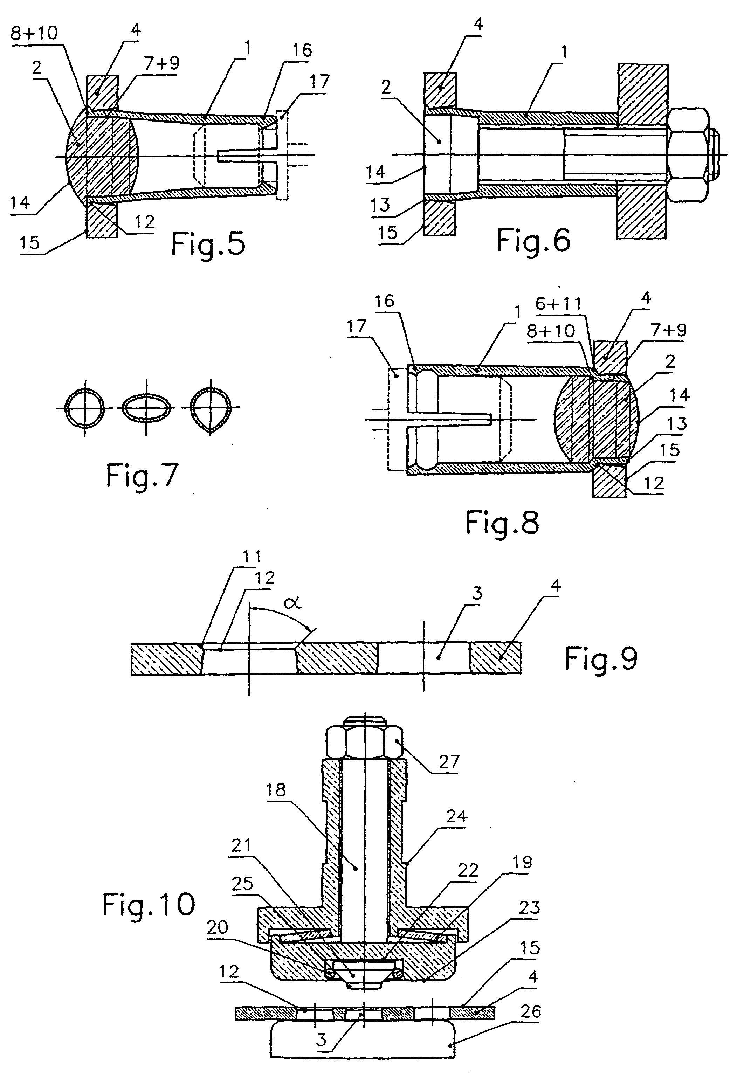

Fig. 5 zeigt eine Ausführung, bei welcher die Anlageflächen 8 und 10 auf die Stirnseite des Gehäuses 1 verlegt sind. Hierdurch ist eine maximale Öffnung für das Linsenelement gegeben. Allerdings ist eine plane Ausführung so nicht sinnvoll zu verwirklichen.

Fig. 6 zeigt beispielsweise eine Ausführung ohne optische Funktion. Anstelle des Linsenelementes ist ein Metallbolzen 2 mit Gewinde eingepreßt, welcher zur Befestigung der Matrixplatte verwendet wird. Das Gehäuse 1 hat die Funktion einer Distanzierung. Auf ähnliche Art und Weise lassen sich Steckbuchsen, Detektoren, Blinddeckel etc. nach dem gleichen Prinzip plan und dicht in die Matrixplatte einbauen. Auch hohle Linsenelemente bzw. Bauteile sowie Baugruppen lassen sich auf die gleiche Weise befestigen.

Fig. 7 zeigt, daß Lochform und Querschnitt der Optikeinheit auch unrund sein können, vor allem, wenn Optiken mit orientierter Lichtausstrahlung gegen falschen Einbau oder Verdrehen gesichert werden müssen. Z.B. ist bei vertikal schmaler, horizontal breitstreuender Lichtverteilung ein elliptischer Querschnitt sinnvoll, bei unsymmetrischer Abstrahlrichtung darf die Optik nur eine einzige Montageposition besitzen (tropfenförmiger Querschnitt). Es empfehlen sich vor allem allseitig konvexe Geometrien. Polygonquerschnitte sind bei den Ecken sehr schwer abzudichten.

Fig. 8 zeigt die umgekehrte Ausführungsmöglichkeit. Die Optik wird von innen in die Matrixplatte eingebaut und bietet auch so eine glatte bzw. auch ebene Oberfläche 13+14+15.

Fig. 9 zeigt das Einbauloch 3 in der Matrixplatte 4 vor und nach Einbringung der Prägung 11. Die Herstellung erfolgt besonders wirtschaftlich auf einer CNC-Nibbelmaschine durch Stanzen des Loches und anschließendes Prägen der Vertiefung 11 bzw. der Kante 12. Durch geeignete Wahl des Winkels Á und der Art und Größe der Prägung 11 läßt sich die vorgestellte Montageweise an unterschiedliche Größen, Anforderungen und Materialien anpassen.

Die präzise Ausführungen der Befestigungslöcher ist für eine exakte Ausrichtung der Optiken sehr wichtig. Mittels eines geeigneten Spezialwerkzeuges können die bei üblicher Fertigung auftretenden Fertigungstoleranzen verhindert werden.

Fig. 10 zeigt einen Schnitt durch eine beispielhafte Ausführung eines geeigneten Sonderprägestempels. Der die Prägung 11 erzeugende Präge-Einsatz 21 ist in einer Vertiefung der Anlagefläche 23 mit Hilfe eines unter leichter Vorspannung stehenden O-Ringes 20 seitlich begrenzt verschieblich gehalten. Die genaue Position bezüglich der Anlagefläche 23 ist durch Beilage von Distanzscheiben 22 in die Ausnehmung möglich. Der Präge-Einsatz 21 hat die konische Außenform der Prägung 11 und besitzt einen Fortsatz 25, welcher die Kante 12 kalibriert. Der Stempel 18 mit der Anlagefläche 23 ist in der Werkzeugaufnahme 24 über eine mit der Mutter 27 vorgespannte Tellerfeder 19 axial verschieblich gelagert.
Zu Beginn der Prägung fädelt zunächst der Fortsatz 25 in das bereits vorhandene Loch 3 ein, bis der Einsatz 21 die Lochkante berührt. Bei exzentrischer Position verschieben die Berührungskräfte den konischen Einsatz 21 seitlich soweit, bis er exakt auf das Loch 3 zentriert ist und entlang des gesamten Lochrandes anliegt. Nun beginnt der eigentliche Prägevorgang, bis die Anlagefläche 23 auf der Matrix-Vorderseite 15 zur Anlage kommt.

Gleichzeitig liegt bei richtiger Abstimmung auch die Kante 12 am Kalibrierfortsatz 25 allseitig an. Der Prägevorgang ist hiermit abgeschlossen. Der Ausgleich der Dickentoleranz der Matrixplatte 4 sowie die Maschinentoleranz erfordert jedoch eine geringfügige weitere Hubbewegung der Werkzeugaufnahme 24, welche dann durch die Tellerfeder 19 abgefedert wird. Diese ist durch die Mutter 27 so stark vorgespannt, daß sie erst nach der vollständigen Prägung und Anlage des Stempels auf der Matrixoberfläche einfedert.

Die begrenzte seitliche Verschiebbarkeit des Einsatzes 21 gleicht Positionstoleranzen aus, welche durch die Maschine selbst verursacht werden, aber auch geringe Veränderungen der Matrixplattengeometrie durch Werfen oder Verziehen durch die Stanzbeanspruchung, sowie Wärmedehnungen. Die Anlagefläche 23 sorgt dafür, daß der Prägehub immer gleich groß ist, unabhängig von der Blechstärke oder Stärken-Toleranz, wobei die Tellerfeder die überschüssige Zustellbewegung abfängt.

In einer Ausführungsvariante kann je nach Maschinentyp anstelle des Stempels 18 auch die Matrize 26 einfedern. Natürlich kann anstelle des Einsatzes 21 auch der gesamte Stempel 18 seitlich begrenzt verschieblich gelagert sein.

## Patentansprüche

1. Optikeinheit für ein Signal-, Verkehrs- oder Anzeigegerät, insbesondere ein Wechselverkehrszeichen, mit einer Matrixplatte (4) mit mindestens einem gestanzten Loch (3) das in seinem Verlauf eine durch anschließende Prägung hergestellte Materialverdrängung erzeugte Kante (12) aufweist, die das Loch (3) verengt, mit einem Gehäuse (1) aus nachgiebigem Material vorzugsweise zähem Kunststoff, das in das Loch (3) einsetzbar ist, wobei die Außenwand des Gehäuses (1) einen an das zylindrische Loch (3) angepassten zylindrischen Abschnitt (5) aufweist, und mit einem Linsenelement, das in das in das Loch (3) eingesetzte Gehäuse (1) einpressbar ist und das einen an seine Stirnseite (14) angrenzenden zylindrischen Abschnitt (9) aufweist, der an eine zylindrische Innenseite (7) des Gehäuses (1) angepasst ausgebildet ist, derart, dass im eingesetzten Zustand das Linsenelement (2) über die Anlage seines zylindrischen Abschnitts (9) an die Innenseite (7) des Gehäuses (1) dessen zylindrischen Abschnitt (5) durch Druck gegen die Kante (12) im Loch (3) plastisch verformt und so die Kante (12) einbettet.

2. Optikeinheit nach Anspruch 1, **dadurch gekennzeichnet, dass** an dem zylindrischen Abschnitt (9) des Linsenelements (2) eine Einführschräge (9a) anschließt.

3. Optikeinheit nach Anspruch 1 oder 2, **dadurch gekennzeichnet, dass** das Gehäuse (1) in der Matrixplatte (4) durch Anlage eines Bundes (6) an der durch die Prägung gebildeten Vertiefung (11) positioniert ist und dass das Linsenelement (2) eine Anschlagfläche (10) aufweist, die zur Positionierung des Linsenelements (2) im Gehäuse (1) an einer entsprechenden Gegenfläche (8) des Gehäuses (1) anliegt.

4. Optikeinheit nach einem der Ansprüche 1 bis 3, **dadurch gekennzeichnet, dass** die Stirnfläche (13) des Bundes (6) und/oder die Stirnfläche (14) des Linsenelementes (2) eben sind und im eingebauten Zustand in einer Ebene mit der Vorderseite (15) der Matrixplatte (4) liegen.

5. Optikeinheit nach einem der Ansprüche 1 bis 4, **dadurch gekennzeichnet, dass** die Stirnfläche (13) des Bundes (6) und die Stirnfläche (14) des Linsenelementes (2) im eingebauten Zustand eine möglichst geschlossene, stetige Fläche mit der Vorderseite (15) der Matrixplatte (4) bilden.

6. Optikeinheit nach einem der Ansprüche 1 bis 5, **dadurch gekennzeichnet, dass** die durch die Prägung gebildeten Vertiefung (11) als Konus ausgebildet ist.

7. Optikeinheit nach einem der Ansprüche 1 bis 6, **dadurch gekennzeichnet, dass** der Bund (6) im eingebauten Zustand an die Geometrie der durch die Prägung gebildeten Vertiefung (11) angeglichen ist.

8. Optikeinheit nach einem der Ansprüche 1 bis 7, **dadurch gekennzeichnet, dass** das Loch (3) mit der Kante (12) über den gesamten Lochumfang ein konstantes Profil aufweist.

9. Optikeinheit nach einem der Ansprüche 1 bis 8, **dadurch gekennzeichnet, dass** die Wandstärke des Gehäuses (1) im Bereich dessen Durchtritts durch die Matrixplatte (4) konstant ist.

10. Optikeinheit nach einem der Ansprüche 1 bis 9, **dadurch gekennzeichnet, dass** der Querschnitt des Loches (3) kreisförmig, elliptisch oder tropfenförmig ist.

11. Optikeinheit nach einem der Ansprüche 1 bis 10, **dadurch gekennzeichnet, dass** an den zylindrischen Abschnitt (5) des Gehäuses (1) eine Einführschräge (5a) anschließt.

12. Optikeinheit nach einem oder mehreren der Ansprüche 1 bis 11, **dadurch gekennzeichnet, dass** das Gehäuse (1) als Abstützung und das Linsenelement (2) als Befestigungsbolzen der Matrixplatte (4) an einem Blinddeckel ausgeführt ist.

## Claims

1. Optics unit for a signal, traffic or display device, in particular a changeable traffic sign, having a matrix plate (4) with at least one punched hole (3) which has along its course an edge (12) which is made by a material displacement produced by subsequent stamping and which constricts the hole (3), having a housing (1) made from flexible material, preferably tough plastic, which can be inserted into the hole (3), the outer wall of the housing (1) having a cylindrical section (5) adapted to the cylindrical hole (3), and having a lens element which can be pressed into the housing (1) inserted into the hole (3) and which has a cylindrical section (9), adjoining its end face (14), which is constructed in a fashion adapted to a cylindrical inner surface (7) of the housing (1) in such a way that when the lens element (2) is in the inserted state the bearing of its cylindrical section (9) against the inner surface (7) of the housing (1) causes the cylindrical section (5) of the latter to be plastically deformed by pressure against the edge (12) in the hole (3), thus embedding the edge (12).

2. Optics unit according to Claim 1, **characterized in that** an insertion bevel (9a) adjoins the cylindrical section (9) of the lens element (2).

3. Optics unit according to Claim 1 or 2, **characterized in that** the housing (1) is positioned in the matrix plate (4) by the bearing of a collar (6) on a depression (11) formed by the stamping, and **in that** the lens element (2) has a stop surface (10) which bears against a corresponding mating surface (8) of the housing (1) in order to position the lens element (2) in the housing (1).

4. Optics unit according to one of Claims 1 to 3, **characterized in that** the end face (13) of the collar (6) and/or the end face (14) of the lens element (2) are flat and lie in the installed state in one plane with the front side (15) of the matrix plate (4).

5. Optics unit according to one of Claims 1 to 4, **characterized in that** in the installed state the end face (13) of the collar (6) and the end face (14) of the lens element (2) form with the front side (15) of the matrix plate (4) a continuous surface as closed as possible.

6. Optics unit according to one of Claims 1 to 5, **characterized in that** the depression (11) formed by the stamping is constructed as a cone.

7. Optics unit according to one of Claims 1 to 6, **characterized in that** in the installed state the collar (6) is adapted to the geometry of the depression (11) formed by the stamping.

8. Optics unit according to one of Claims 1 to 7, **characterized in that** the hole (3) with the edge (12) has a constant profile over the entire circumference of the hole.

9. Optics unit according to one of Claims 1 to 8, **characterized in that** the wall thickness of the housing (1) is constant in the region where the housing penetrates the matrix plate (4).

10. Optics unit according to one of Claims 1 to 9, **characterized in that** the cross section of the hole (3) is circular, elliptical or drop-shaped.

11. Optics unit according to one of Claims 1 to 10, **characterized in that** an insertion bevel (5a) adjoins the cylindrical section (5) of the housing (1).

12. Optics unit according to one or more of Claims 1 to 11, **characterized in that** the housing (1) is designed as a support, and the lens element (2) is designed as a fastening bolt of the matrix plate (4) on a blind cover.

## Revendications

1. Unité optique pour un dispositif de signalisation, de circulation ou d'affichage, en particulier un signal routier variable, équipée d'une matrice (4) munie au moins d'un trou estampé (3) qui présente un bord (12) créé par un refoulement de matériau fabriqué par gravure ultérieure, qui rétrécit le trou (3), munie d'un boîtier (1) en un matériau élastique de préférence en matière synthétique rigide, qui peut être inséré dans le trou (3), dans lequel la paroi extérieure du boîtier (1) présente une section (5) cylindrique adaptée au trou cylindrique (3), et munie d'une lentille, qui peut être enfoncée dans le boîtier inséré (1) dans le trou (3) et qui présente une section (9) cylindrique adjacente à son côté antérieur (14), qui est réalisée de façon appropriée à un côté interne (7) cylindrique du boîtier (1), de sorte que dans l'état inséré, la lentille (2), grâce à la disposition de sa section cylindrique (9) sur le côté interne (7) du boîtier (1), dont la section cylindrique (5) se déforme plastiquement à cause de la pression contre le bord (12) dans le trou (3) et ainsi enrobe le bord (12).

2. Unité optique selon la revendication 1, **caractérisée en ce que** la section cylindrique (9) de la lentille (2) se raccorde à une partie oblique d'insertion (9a).

3. Unité optique selon la revendication 1 ou 2, **caractérisée en ce que** le boîtier (1) est positionné dans la matrice (4) par application d'une collerette (6) sur l'évidement (11) formé par gravure et **en ce que** la lentille (2) présente une surface d'arrêt (10), qui s'ajuste en vue du positionnement de la lentille (2) dans le boîtier (1) sur une surface antagoniste correspondante (8) du boîtier (1).

4. Unité optique selon l'une des revendications 1 à 3, **caractérisée en ce que** la surface antérieure (13) de la collerette (6) et ou la surface antérieure (14) de la lentille (2) sont planes et, dans un état incorporé, se trouvent dans un plan avec la face avant (15) de la matrice (4).

5. Unité optique selon l'une des revendications 1 à 4, **caractérisée en ce que** la surface antérieure (13) de la collerette (6) et la surface antérieure (14) de la lentille (2) dans un état incorporé forment une surface continue la plus étanche possible avec la face avant (15) de la matrice (4).

6. Unité optique selon l'une des revendications 1 à 5, **caractérisée en ce que** l'évidement (11) formé par gravure est réalisé sous forme de cône.

7. Unité optique selon l'une des revendications 1 à 6, **caractérisée en ce que** la collerette (6) dans l'état incorporé est adaptée à la géométrie de l'évidement (11) formé par gravure.

8. Unité optique selon l'une des revendications 1 à 7, **caractérisée en ce que** le trou (3) présente un profil constant avec le bord (12) sur toute la circonférence du trou.

9. Unité optique selon l'une des revendications 1 à 8, **caractérisée en ce que** l'épaisseur de paroi du boîtier (1) est constante dans la zone de passage à travers la matrice (4).

10. Unité optique selon l'une des revendications 1 à 9, **caractérisée en ce que** la section du trou (3) est de forme circulaire, elliptique ou en forme de goutte.

11. Unité optique selon l'une des revendications 1 à 10, **caractérisée en ce qu'**une partie oblique d'insertion (5a) se raccorde à la section cylindrique (5) du boîtier (1).

12. Unité optique selon l'une ou plusieurs des revendications 1 à 11, **caractérisée en ce que** le boîtier (1) est réalisé en tant que support et la lentille (2) en tant que boulon de serrage de la matrice (4) sur une bride d'obturation.
